# EUROPEAN PATENT APPLICATION

(11) **EP 1 933 268 A2**
(43) Date of publication of application: **18.06.2008**
(21) Application number: 07254558.5
(22) Date of filing: 23.11.2007
(51) Int. Cl.: G06Q 30/00

(54) **Content reproduction and settlement**

(30) Priority: 12.12.2006 JP 2006334609
(71) Applicant: Sony Corporation, Tokyo 108-0075 (JP)
(72) Inventor: Takehara, Mitsuru c/o Sony Corporation, Tokyo (JP); Sako, Yoichiro c/o Sony Corporation, Tokyo (JP)
(74) Representative: DeVile, Jonathan Mark

(57) **Abstract**

A settlement method includes the steps of, upon detecting an operation for purchasing a product advertised on reproduced information, the product being an article, a content item, or a service, deducting a purchase amount of the product from an electronic money balance recorded as data in an electronic money medium; and transferring electronic money corresponding to the deducted purchase amount to a seller of the product.

## Description

### Field of the Invention

The present invention relates to content reproduction and settlement. Embodiments of the present invention relate to a content reproducing apparatus, and a method of settlement for the purchase of goods.

### Background of the Invention

Television (TV) home shopping programming has been widely available. With the recent growth of the Internet, on-line purchase or purchase of goods from Internet protocol TV (IPTV) programs has also become popular.

Settlement for such purchase of goods, i.e., payment by users who purchased goods, is made by cash on delivery (COD) (which is a method of payment in which users pay charges upon receipt of goods) or by credit card.

Japanese Unexamined Patent Application Publication No. 2001-243382 discloses a settlement method. In this method, a charging party transmits a payment request to a mobile communication terminal of a purchaser (user). Upon receipt of the payment request, the purchaser transmits a settlement request from the mobile communication terminal to a settlement management server in which the purchaser is registered as a subscriber in advance. Upon receipt of the settlement request, the settlement management server makes settlement and sends the result to the mobile communication terminal of the purchaser.

Electronic money (also called digital cash or digital money) systems in which the amount of money is recorded in the form of digital data, such as Edy^{®}, have been developed and available.

Electronic money interfaces connected to or installed in apparatuses, such as a FeliCa^{®} interface connected to a personal computer (PC) through a universal serial bus (USB) port, have been commercially available. For example, a PaSoRi^{®} reader/writer, which is an example of such a FeliCa^{®} interface, can be found on the Internet at <URL: http://www.sony.co.jp/Products/felica/pcrw/> (accessed October 25, 2006).

Further, mobile phones with wallet functions, called mobile wallet phones, having installed therein an electronic money interface such as a FeliCa^{®} interface and an electronic money card (electronic money medium) such as a FeliCa^{®} card have also been commercially available. For example, mobile terminal SO902i, which is the model name of such a mobile terminal, can be found on the Internet at <URL: http://www.nttdocomo.co.jp/product/foma/902i/so902i/> (accessed October 25, 2006).

Further, mobile terminals capable of receiving terrestrial digital broadcasts, called one-seg (one-segment) mobile phones have also been commercially available. For example, mobile terminal P901iTV, which is the model name of such a mobile terminal, can be found on the Internet at <URL:
http://www.nttdocomo.co.jp/product/concept_model/p901itv/ind ex.html> (accessed October 25, 2006).

### Summary of the Invention

Various respective aspects and features of the invention are defined in the appended claims. Combinations of features from the dependent claims may be combined with features of the independent claims as appropriate and not merely as explicitly set out in the claims.

As described above, a method in which a purchaser who purchases a product over TV home shopping, on-line shopping, or the like pays for the product by COD or by credit card may inconvenience both the seller of the product and the purchaser because immediate settlement is not available. In effect, the product seller incurs the risk of not receiving the payment.

This method has another problem. For example, the product seller decides to reduce the price of the product due to a large quantity of the product being sold, and refunds the price difference to users who purchased the product at the high initial price using a time-consuming refunding process. That is, the product seller manages which user, when, and at what price purchased the product, and refunds the difference by, for example, depositing it into a bank account of a purchaser. Such a refunding operation is also costly.

It is therefore desirable to provide immediate settlement at the time of the purchase of a product and to easily and accurately refund, after the purchase of a product, part or all of the amount paid for the product by a purchaser to the purchaser at low cost.

A settlement method according to an embodiment of the present invention includes the steps of upon detecting an operation for purchasing a product advertised on reproduced information, the product being an article, a content item, or a service, deducting a purchase amount of the product from an electronic money balance recorded as data in an electronic money medium; and transferring electronic money corresponding to the deducted purchase amount to a seller of the product.

The settlement method provides immediate settlement at the time of the purchase of a product, which is useful for both a seller of the product and a purchaser. This also ensures that the product seller can receive the payment.

Furthermore, after the purchase of a product, part or all of the amount paid for the product by a purchaser can be easily and accurately refunded to the purchaser at low cost by accessing from one of the purchaser and the product seller to the other to add the refunded amount to an electronic money balance recorded as data in an electronic money medium of the purchaser.

According to the embodiment of the present invention, therefore, immediate settlement at the time of the purchase of a product can be achieved. Furthermore, after the purchase of a product, part of all of the amount paid for the product by a purchaser can be easily and accurately refunded to the purchaser at low cost.

### Brief Description of the Drawings

Embodiments of the invention will now be described with reference to the accompanying drawings, throughout which like parts are referred to by like references, and in which:
Fig. 1 is a diagram showing a first example system configuration of a system according to an embodiment of the present invention;
Fig. 2 is a diagram showing a second example system configuration of the system according to the embodiment of the present invention;
Fig. 3 is a diagram showing a third example system configuration of the system according to the embodiment of the present invention;
Fig. 4 is diagram showing an example of a view of a program and a purchase screen;
Fig. 5 is a diagram showing an electronic money card in which electronic money data and purchase record data are recorded;
Fig. 6 is a flowchart showing an example of a sequence of process steps for the purchase of a product and settlement for the purchase;
Fig. 7 is a diagram showing an example of an electronic money-enabled terminal;
Fig. 8 is a flowchart showing an example of a sequence of process steps executed by the electronic money-enabled terminal;
Fig. 9 is a diagram showing a partial refund of the amount received by a seller; and
Fig. 10 is a flowchart showing an example of a sequence of process steps for refunding.

### Description of the Example Embodiments

### Definitions

Under Trademark Law, goods and services are separately identified. Under Design Law, the term articles is used, and services are identified as goods in the banking, securities, insurance and other financial fields. Video clips, music files, game software, etc., are referred to as content.

In this specification, narrowly defined goods, which are goods under Trademark Law, articles under Design Law, or material items such as tangible property in Civil Code (including personal property and real property) are defined as "articles", and articles, content items, or services that can be purchased by consumers are defined as "products".

The sale and purchase of products are defined as follows. For example, when a user downloads content data such as video data or audio data into a storage device, the user being not permitted to play the content many times, and plays content such as a video clip or a music file once on the basis of the content data, this means that the content (product) is sold and purchased.

Electronic money is electronic representation of an existing amount of money using electronic data, namely, encrypted data. In terms of data, electronic money is specifically referred to as electronic money data.

An electronic money medium such as an electronic money card is a medium in which the electronic money data has been written or is written in a rewritable form, i.e., so as to increase or reduce the amount of money (the remaining balance). The electronic money medium is implemented as, for example, the FeliCa^{®} card described in the previous section.

An electronic money interface is an interface for identifying an electronic money medium such as an electronic money card when the electronic money medium is placed at a predetermined position, e.g., on or near the interface, reading and displaying the amount of electronic money (the remaining balance) stored in the electronic money medium, and reducing or increasing the amount of electronic money (the remaining balance) for each expense or income. The electronic money interface is implemented as, for example, the FeliCa^{®} interface described in the previous section.

In a broad definition, the terms "electronic money" and "electronic money card (electronic money medium)" may include credit card and prepaid card. In this specification, however, the terms "electronic money" and "electronic money card (electronic money medium)" do not include credit card, which merely provides credit, or prepaid card, which is not allowed to increase the stored amount of money (the remaining balance).

### System Configurations

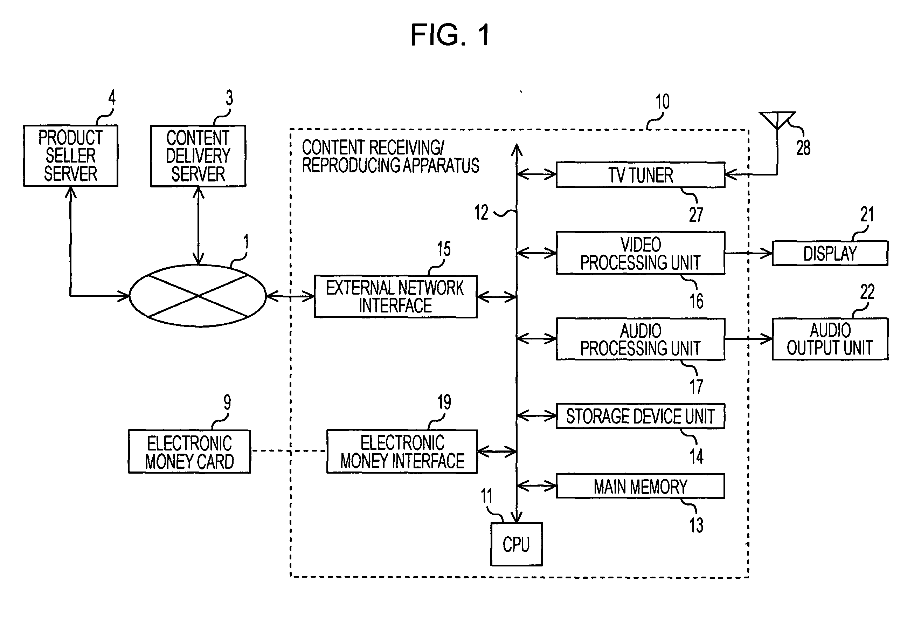

A system according to an embodiment of the present invention will be described hereinafter with respect to system configurations thereof shown in Figs. 1 to 3.

Fig. 1 shows a first example system configuration of the system according to the embodiment of the present invention.

In the first example system configuration, a content receiving/reproducing apparatus 10 is an IPTV receiver having installed therein an electronic money interface 19 such as a FeliCa^{®} interface.

Specifically, the content receiving/reproducing apparatus 10 includes a central processing unit (CPU) 11. The CPU 11 is connected to a main memory 13 and a storage device unit 14 via a bus 12. In the main memory 13, various programs including programs for the purchase of a product and settlement for the purchase and various types of data are loaded. The storage device unit 14 is formed of a semiconductor memory, a hard disk, or the like. The various programs and the various types of data are recorded in the storage device unit 14.

An external network interface 15 for accessing the Internet 1, and the electronic money interface 19 are also connected to the bus 12.

A display 21 and an audio output unit 22 are further connected to the bus 12 via a video processing unit 16 and an audio processing unit 17, respectively. The video processing unit 16 is configured to decode video data of an IPTV program or the like, and the audio processing unit 17 is configured to decode audio data of an IPTV program or the like. The audio output unit 22 includes speakers and headphones.

In the first example system configuration, a TV tuner 27 capable of receiving a TV broadcast such as a terrestrial digital broadcast is also connected to the bus 12, and is installed in the content receiving/reproducing apparatus 10. The TV tuner 27 is connected to an antenna 28.

The system further includes, in addition to the user-side devices described above, a content delivery server 3 and a product seller server 4, which are connected to the Internet 1.

In the first example system configuration, the content delivery server 3 is configured to deliver an IPTV program as a content item. In the first example system configuration, the product seller server 4 is a server run by a seller of a product advertised and sold on an IPTV program or TV broadcast program.

In the system with the first example system configuration, as described below, when a user receives and views an IPTV program or TV broadcast program and purchases a product advertised and sold on the program, the user pays for the product in real time using an electronic money card 9 such as a FeliCa^{®} card, and the seller of the product receives the payment.

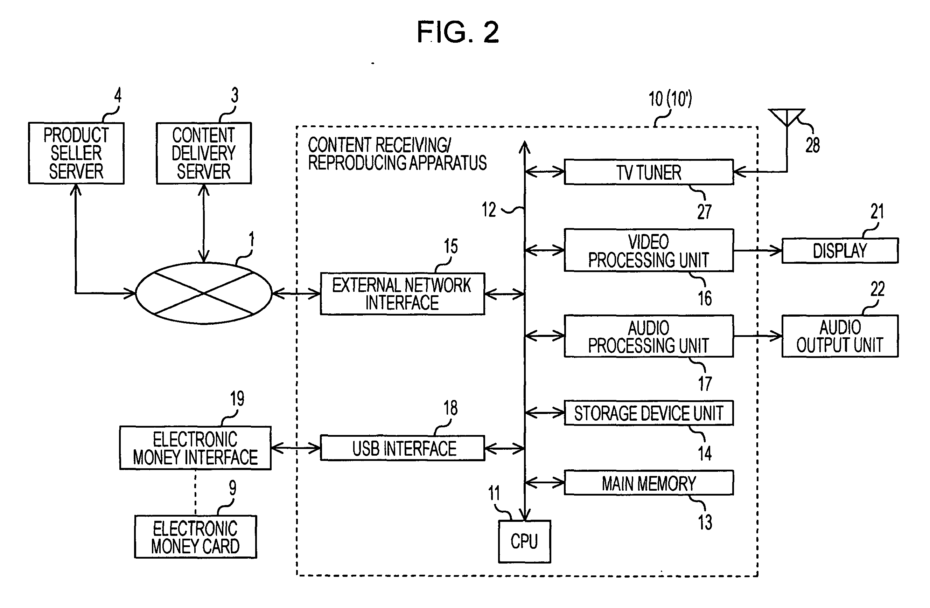

Fig. 2 shows a second example system configuration of the system according to the embodiment of the present invention.

In the second example system configuration, the content receiving/reproducing apparatus 10 (10') is a general-purpose information processing apparatus such as a PC, and the electronic money interface 19, e.g., a PaSoRi^{®} reader/writer, is connected to the content receiving/reproducing apparatus 10' via USB.

Specifically, a USB interface 18 is connected to the bus 12 of the content receiving/reproducing apparatus 10'. Outside the content receiving/reproducing apparatus 10', the electronic money interface 19 is connected to the USB interface 18.

Other elements of the content receiving/reproducing apparatus 10', including the installed TV tuner 27, are the same as those of the content receiving/reproducing apparatus 10 shown in Fig. 1.

In the second example system configuration, the content delivery server 3 is configured to deliver content such as a video clip, a music file, or an IPTV program.

Also in the system with the second example system configuration, as described below, when a user receives and plays the content and purchases a product advertised and sold on the content, the user can pay for the product in real time using the electronic money card 9, such as a FeliCa^{®} card, and the seller of the product can receive the payment.

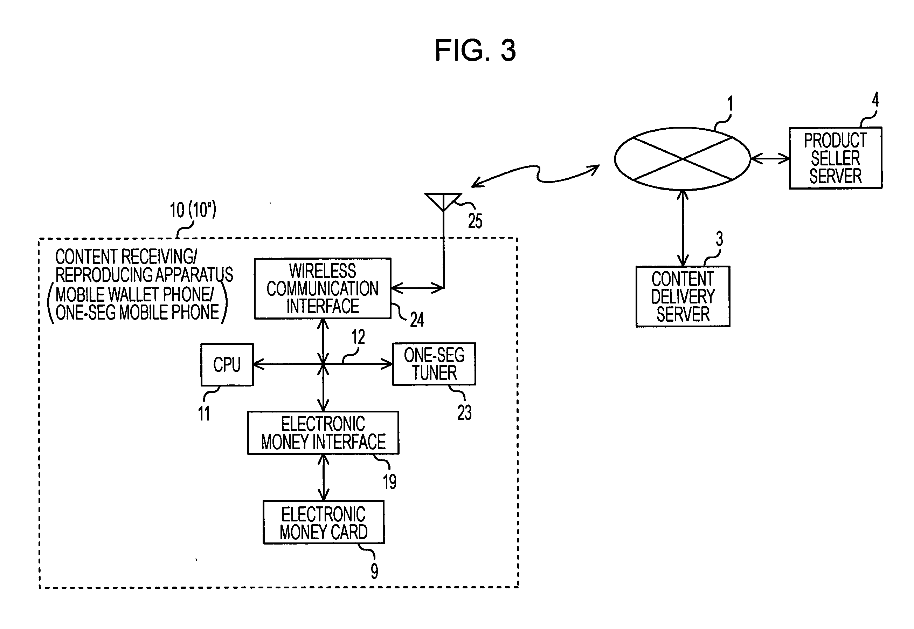

Fig. 3 shows a third example system configuration of the system according to the embodiment of the present invention.

In the third example system configuration, the content receiving/reproducing apparatus 10 (10") serves as both a one-seg (one-segment) mobile and a mobile wallet phone.

Specifically, the content receiving/reproducing apparatus 10'' includes a CPU 11. The CPU 11 is connected to an electronic money interface 19 such as a FeliCa^{®} interface, a one-seg tuner 23, and a wireless communication interface 24 via the bus 12. An electronic money card 9 such as a FeliCa^{®} card is connected to the electronic money interface 19. An antenna 25 is connected to the wireless communication interface 24.

The content receiving/reproducing apparatus 10" also has a function as a mobile phone terminal or mobile wireless terminal.

In the third example system configuration, the content delivery server 3 is configured to deliver content such as a video clip, a music file, or a terrestrial digital broadcast.

Also in the system with the third example system configuration, as described below, when a user receives and plays the content and purchases a product advertised and sold on the content, the user can pay for the product in real time using the electronic money card 9, and the seller of the product can receive the payment.

### Purchase of Product and Settlement for Purchase

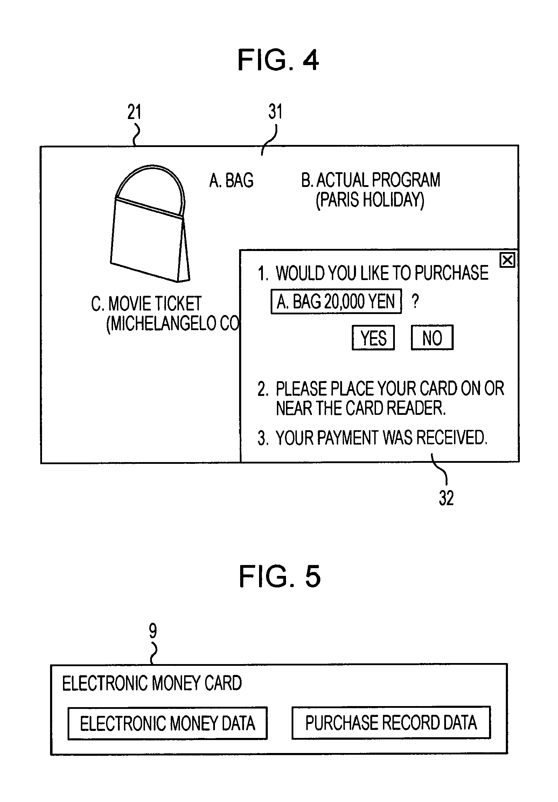

A method for the purchase of a product and for settlement for the purchase will be described with reference to Figs. 4 to 6.

In the system with the configuration shown in Fig. 1, a product is advertised and sold on an IPTV program or TV broadcast program.

For example, in a drama program, objects worn by actors and relevant goods are advertised and sold. In a TV home shopping program, articles to be sold, services, or content items are advertised. In a preview program of a certain pay program, the content of the pay program, which is the actual program, is advertised and sold as a product.

Fig. 4 shows an example of the view of such a program. In this example, for convenience of illustration, a program screen 31 on which three products, a bag, the actual program, and a movie ticket (theater admission ticket), are advertised and sold is displayed on the display 21.

Actually, data is delivered in a broadcasting markup language (BML) to help a user specify a product.

The bag is an example of articles, the actual program is an example of content items, and the movie ticket is an example of services.

A user who finds a desired product selects the desired product and performs a purchase operation such as pressing a purchase button.

When the user performs the purchase operation, as shown in Fig. 4, the CPU 11 of the content receiving/reproducing apparatus 10 displays a purchase screen 32 on the display 21 to show the name, price, etc., of the product selected by the user on the purchase screen 32. On the purchase screen 32, a message is displayed to prompt the user to place the card on or near the electronic money interface 19.

When the user places the electronic money card 9 on or near the electronic money interface 19, the CPU 11 performs a settlement process (payment process) to rewrite electronic money data recorded in the electronic money card 9 in a manner shown in Fig. 5 to deduct the purchase amount of the product purchased by the user from an electronic money balance existing in the electronic money card 9. Further, the CPU 11 transfers the deducted amount, i.e., electronic money corresponding to the purchase amount, to the seller of the product so that the product seller obtains the purchase amount.

In the system with the configuration shown in Fig. 1, if the product is advertised and sold on an IPTV program delivered from the content delivery server 3, the content receiving/reproducing apparatus 10 and the content delivery server 3 communicate with each other to temporarily transfer the electronic money corresponding to the purchase amount of the product to the content delivery server 3 at the time of the purchase of the product. Thereafter, the content delivery server 3 and the product seller server 4 communicate with each other to finally transfer the electronic money corresponding to the purchase amount to the product seller. Alternatively, the system may be configured such that, at the time of the purchase of the product, the content receiving/reproducing apparatus 10 accesses the product seller server 4 at the address of the product seller server 4, which is transmitted from the content delivery server 3, to directly transfer the electronic money corresponding to the purchase amount from the content receiving/reproducing apparatus 10 to the product seller server 4.

Even in the former case, the product seller can be regarded as receiving the electronic money corresponding to the purchase amount at the time when the electronic money corresponding to the purchase amount is transferred to the content delivery server 3.

In the system with the configuration shown in Fig. 1, if the product is advertised and sold on a TV broadcast program, the content receiving/reproducing apparatus 10 accesses the product seller server 4 at the address of the product seller server 4, which is transmitted via TV broadcasting, at the time of the purchase of the product so that the electronic money corresponding to the purchase amount is directly transferred from the content receiving/reproducing apparatus 10 to the product seller server 4.

When the CPU 11 deducts the electronic money corresponding to the purchase amount from the electronic money balance stored in the electronic money card 9 and sends it to the product seller in the manner described above, the CPU 11 notifies the user of the reception of the purchase amount and the completion of the settlement by displaying text or an image on the purchase screen 32 or providing an audible output such as a sound effect.

If the product purchased by the user is a service such as a movie ticket as described above, the CPU 11 writes purchase record data in the electronic money card 9 in the manner shown in Fig. 5 at the same time when the CPU 11 reduces the electronic money balance in the manner described above, and issues a ticket to the user. The purchase record data is used when the user actually receives the service such as watching the movie at a theater.

The purchase record data specifies a service that can be received by the owner of the electronic money card 9, and indicates information such as a place where and a period of time by which the service can be received. The purchase record data further certifies that the owner has paid for the service. As described below, the user can receive the service in exchange for the purchase record data, i.e., the ticket.

If the product purchased by the user is an article or a content item, likewise, as described below, the purchase record data may be written in the electronic money card 9 in the manner described above to certify that acknowledges the user has paid (the product seller has received the payment) when the user receives the product or receives a refund.

The above-described method for the purchase of a product and settlement for the purchase may also be used when the user purchases a product using the system with the configuration shown in Fig. 2.

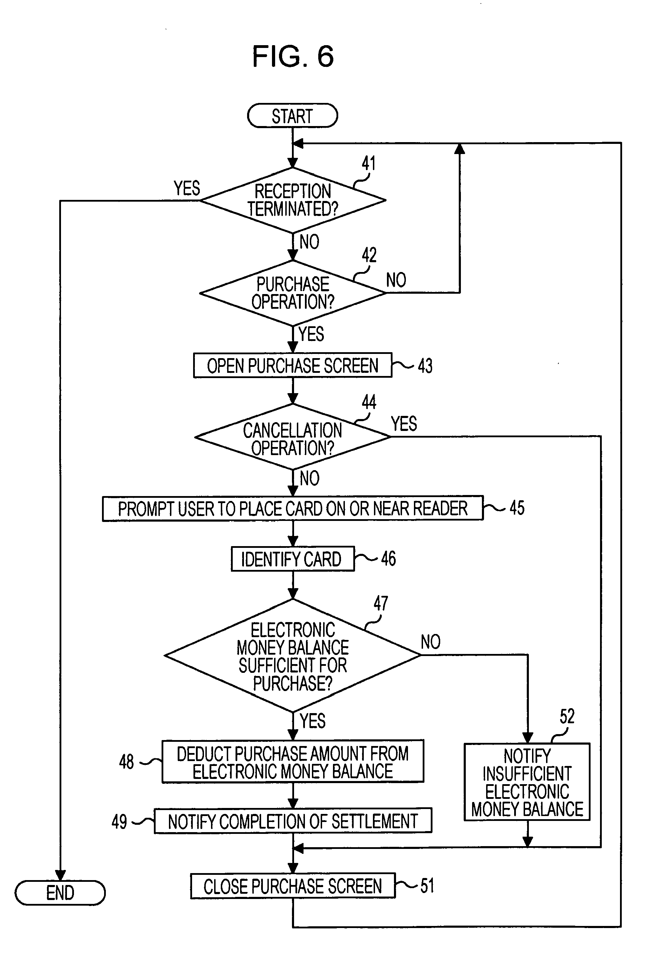

Fig. 6 shows an example of a sequence of process steps executed by the CPU 11 of the content receiving/reproducing apparatus 10 when the user purchases a product using the system with the configuration shown in Fig. 1 or 2.

In the example shown in Fig. 6, the sequence of process steps starts in the state where a content item such as a program or a video clip is being received and reproduced. First, in step 41, it is determined whether or not the reception is terminated. If the reception is terminated by a user's termination operation or the like, the sequence of process steps ends, otherwise, in step 42, it is determined whether or not a purchase operation is performed by the user.

If no purchase operation is performed by the user, the process returns from step 42to step 41. If a purchase operation such as that described above is performed, the process proceeds from step 42 to step 43, in which a purchase screen such as the purchase screen 32 described above is opened to show the name, price, etc., of the product.

Then, in step 44, the CPU 11 determines whether or not a cancellation operation is performed by the user. If the user does not close the purchase screen or does not change the product, the process proceeds from step 44 to step 45, in which the user is prompted to place the electronic money card on or near the electronic money interface 19.

Then, in step 46, the CPU 11 identifies the electronic money card 9 via the electronic money interface 19. In step 47, the CPU 11 determines whether or not the electronic money corresponding to the purchase amount exists in the electronic money card 9.

If the electronic money corresponding to the purchase amount exists in the electronic money card 9, the process proceeds from step 47 to step 48, in which the CPU 11 deducts the purchase amount from the electronic money balance in the manner described above, and writes purchase record data in the electronic money card 9 in the manner described above according to the circumstance or necessity. Then, the process proceeds to step 49, in which the CPU 11 notifies the completion of the settlement in the manner described above.

After the notification of the completion of the settlement, in step 51, the CPU 11 closes the purchase screen. Then, the process returns to step 41.

If it is determined in step 47 that the electronic money corresponding to the purchase amount does not exist in the electronic money card 9, in step 52, the CPU 11 notifies the user that the electronic money balance is not sufficient for the purchase using a visual output or an audible output. In step 51, the CPU 11 closes the purchase screen. Then, the process returns to step 41.

If it is determined in step 44 that a cancellation operation is performed by the user, in step 51, the CPU 11 closes the purchase screen. Then, the process returns to step 41.

The above-described method for the purchase of a product and settlement for the purchase can basically be used also in the system with the configuration shown in Fig. 3. In the system with the configuration shown in Fig. 3, however, since the electronic money card 9 is installed in the content receiving/reproducing apparatus 10, there is no need for a user to place an electronic money card on or near a card reader, and the processing of step 45 for prompting the user to place an electronic money card on or near a card reader can be omitted.

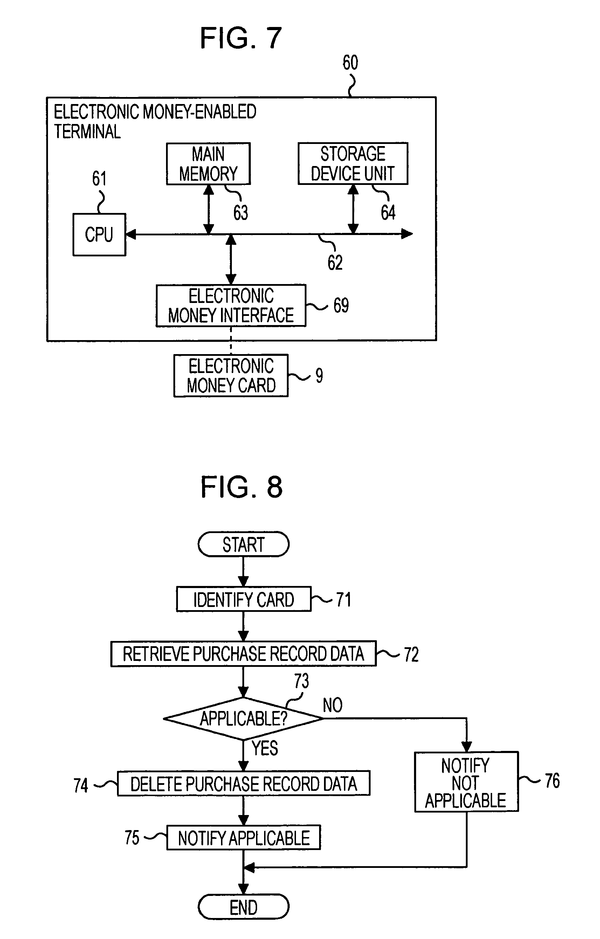

A method for the receipt of a product will be described with reference to Figs. 7 and 8.

If the product purchased by the user is a service, e.g., a movie ticket for a movie at a theater, purchase record data is written in the electronic money card 9 in the manner described above. The user can receive the service in exchange for the ticket.

Fig. 7 shows an example of an electronic money-enabled terminal 60 located in a facility where services are actually provided, such as a theater or a retail store.

The electronic money-enabled terminal 60 includes a CPU 61, and the CPU 61 is connected to a main memory 63, a storage device unit 64, an electronic money interface 69, etc., via a bus 62.

A user who desires to receive a service such as to watch a movie places an electronic money card 9 having purchase record data recorded therein on or near the electronic money interface 69 so that the user can actually receive the service.

Fig. 8 shows an example of a sequence of process steps executed by the CPU 61 of the electronic money-enabled terminal 60.

First, in step 71, the CPU 61 identifies the electronic money card 9 via the electronic money interface 69, and then, in step 72, retrieves purchase record data from the electronic money card 9. In step 73, the CPU 61 determines whether or not the retrieved purchase record data is applicable.

If the electronic money card 9 has purchase record data written therein in the manner shown in Fig. 5 and the service to be provided and the place where and the period of time by which the service can be received and the like are appropriate, the process proceeds from step 73 to step 74, in which the purchase record data written in the electronic money card 9 is deleted. In step 75, the CPU 61 notifies the user that the purchase record data is applicable by displaying text or an image or providing an audible output such as a sound effect.

Therefore, the service provider actually provides the service, and the user can actually receive the service.

If the electronic money card 9 has no purchase record data written therein, or if the service to be provided or the place where and the period of time by which the service can be received and the like are not appropriate even though purchase record data is already written in the electronic money card 9, the process proceeds from step 73 to step 76, in which the CPU 61 notifies the user that the retrieved purchase record data is not applicable by displaying text or an image or providing an audible output such as a sound effect.

If the product is an article, the following operation is performed. In the case where purchase record data is not written in the electronic money card 9 at the time of the purchase, the user places his/her signature or rubber stamp on a receipt when he/she receives the article delivered from the product seller. In the case where purchase record data is written in the electronic money card 9 at the time of the purchase, as with the case of services, the user can receive the article in exchange for a ticket issued on the basis of the purchase record data.

If the product is a content item recorded in a recording medium such as an optical disk or a memory card, an operation similar to that for articles is performed.

If the product is a content item delivered from the content delivery server 3, such as a pay program, which is the actual program introduced in a preview program thereof, or a content item broadcast as a TV broadcast, the content delivery server 3 or the content receiving/reproducing apparatus 10 records the completion of the receipt (the completion of the payment) or writes purchase record data in the electronic money card 9 at the time of the purchase of the content item. This ensures that even if the content item is delivered or broadcast after the lapse of a certain period of time or a certain number of days from the date of purchase, the user can receive and reproduce the content item.

### Refund of Part or All of Purchase Amount

Product sellers are obligated to increase the price for a small purchase market to ensure cost recovery and profit, and are likely to reduce the price for a large purchase market.

For example, in the system with the configurations shown in Figs. 1 to 3, where the content delivery server 3 delivers video or music content and a user purchases the content and receives and reproduces the content using the content receiving/reproducing apparatus 10, the price of the content may be changed according to the number of purchasers.

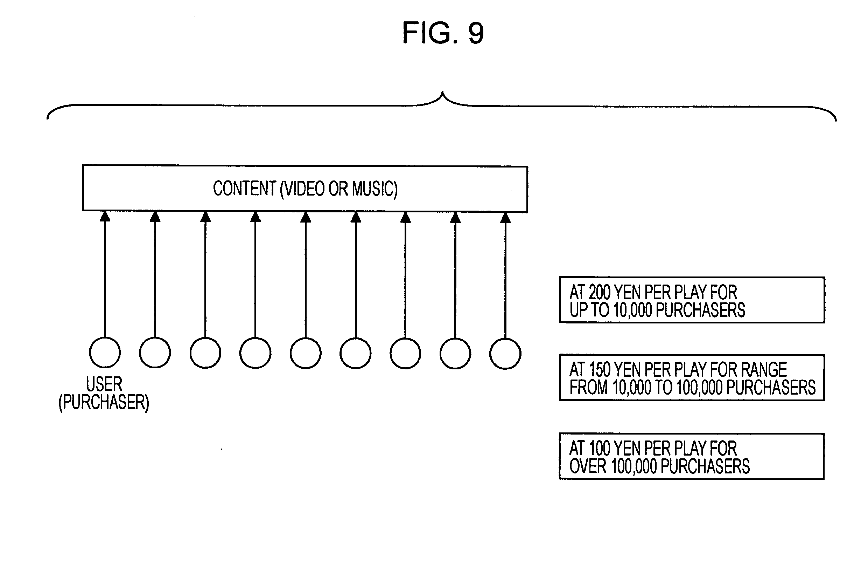

For example, as shown in Fig. 9,
(a) a price of 200 yen per play (or view) is set with an expectation of up to 10,000 purchasers,
(b) a price of 150 yen per play (or view) is set with an expectation of a range from 10,000 to 100,000 purchasers, and
(c) a price of 100 yen per play (or view) is set with an expectation of over 100,000 purchasers.

Note that the number of purchasers refers to the total number of times the content is purchased. If the same user purchases and plays the content twice, the number of purchasers is two.

In this case, the user may be unwilling to purchase the content at the initial time of sale because the later the content is purchased, the lower the price.

According to the system with the configurations shown in Figs. 1 to 3, the price difference can easily and accurately be refunded to users who purchased the content with a high price at the initial time of sale at low cost when the price is reduced because of a large number of purchasers. A specific method will be described.

A user's purchase of the product, the number of purchases of the product, and the purchase price are recorded in the content delivery server 3, the product seller server 4, or the content receiving/reproducing apparatus 10, or are recorded as purchase record data in the electronic money card 9.

Following is examples of the number of purchases and the purchase price, which differ depending on users, in the situation shown in Fig. 9:
(p) A total of two purchases and a total of 400 yen (200 yen for the first purchase and 200 yen for the second purchase);
(q) A total of one purchase and a total of 200 yen (200 yen for the first purchase only);
(r) A total of two purchases and a total of 350 yen (200 yen for the first purchase and 150 yen for the second purchase);
(s) A total of two purchases and a total of 300 yen (150 yen for the first purchase and 150 yen for the second purchase); and
(t) A total of one purchase and a total of 150 yen (150 yen for the first purchase only).
   When the user knows that the price is reduced and the price difference will be refunded, the user can use the content receiving/reproducing apparatus 10 to access the content delivery server 3 or the product seller server 4 to request a refund of the difference. The system can also be configured such that if the user does not make such a request, the content delivery server 3 or the product seller server 4 accesses the content receiving/reproducing apparatus 10 to refund the difference to the user.
   As with the example shown in Fig. 9, when the price is reduced two or more times, either of the following methods can be used:
(x) the price difference is refunded each time the price is reduced; and
(y) the price difference is refunded once at the final reduction in price.

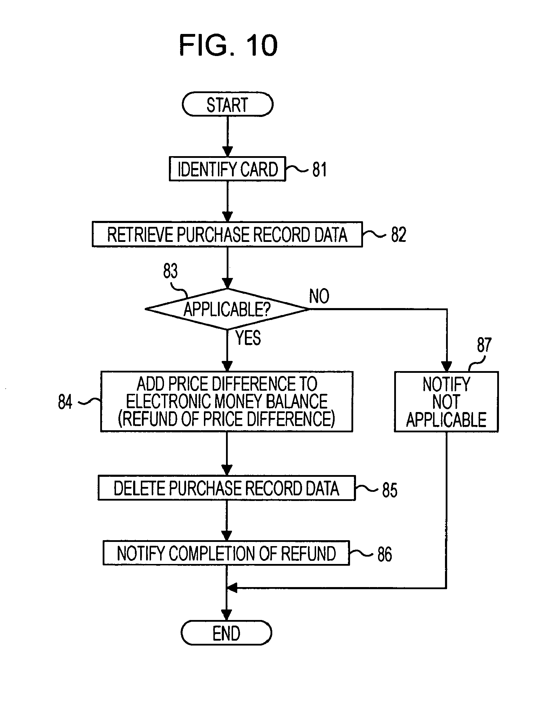

Fig. 10 shows an example of a sequence of process steps executed by the CPU 11 of the content receiving/reproducing apparatus 10 when the product seller refunds the price difference to a user in the system with the configurations shown in Figs. 1 to 3.

In this example, a user's purchase of the product, the number of purchases of the product, and the purchase price are recorded as purchase record data in the electronic money card 9, and, as described in item (y) above, the price difference is refunded once at the final reduction in price.

The CPU 11 starts a sequence of process steps below when the user uses the content receiving/reproducing apparatus 10 to request the content delivery server 3 or the product seller server 4 to refund the price difference and, in the system with the configuration shown in Fig. 1 or 2, the user places the electronic money card 9 on or near the electronic money interface 19 (in the system with the configuration shown in Fig. 3, this operation can be omitted because the electronic money card 9 is installed in the content receiving/reproducing apparatus 10), or when the content delivery server 3 or the product seller server 4 accesses the content receiving/reproducing apparatus 10 and, in the system with the configuration shown in Fig. 1 or 2, the user places the electronic money card 9 on or near the electronic money interface 19.

After the start of the process, first, in step 81, the CPU 11 identifies the electronic money card 9 via the electronic money interface 19, and then, in step 82, retrieves purchase record data from the electronic money card 9. In step 83, the CPU 11 determines whether or not the retrieved purchase record data is applicable.

If the electronic money card 9 has purchase record data written therein in the manner shown in Fig. 5 and the purchased product, the purchase price, and the like are appropriate, the process proceeds from step 83 to step 84, in which the electronic money data written in the electronic money card 9 is updated to add the price difference to the electronic money balance.

That is, in the example shown in Fig. 9, when the purchase record (p) described above is stored for the content, 200 yen is added. When the purchase record (r) described above is stored for the content, 150 yen is added.

Then, in step 85, the CPU 11 deletes the purchase record data written in the electronic money card 9. In step 86, the CPU 11 notifies the user of the completion of the refund by displaying text or an image or providing an audible output such as a sound effect.

If the electronic money card 9 has no purchase record data written therein, or if the purchased product, the purchase price, and the like are not appropriate even though purchase record data is already written, the process proceeds from step 83 to step 87, in which the CPU 11 notifies the user that the retrieved purchase record data is not applicable by displaying text or an image or providing an audible output such as a sound effect.

In step 85, the purchase record data may be updated, without being deleted, so that the price difference has been refunded.

In the case where the price difference is refunded each time the price is reduced as indicated in item (x) above, likewise, in step 85, the purchase record data is updated so that the price difference has been refunded.

For example, in the example shown in Fig. 9, if the price difference is refunded when, as described in item (b) above, the price is reduced from 200 yen to 150 yen, in step 84, a price difference of 50 yen is refunded to a user who has the purchase record (q) described above. In step 85, the purchase record data is updated so as to indicate one purchase at a price of 150 yen.

According to the methods described above, as a consequence, in the long run, the same price is paid regardless of how early or late the time of the purchase might be. A user can play desired content early, and a content seller can expect viral marketing, which encourages users who purchased at the initial time of sale to pass on recommendations of the content to other users.

The refunding method described above is not limited to the case of reduction in price of products due to an increased number of purchasers, described above, and may be used for, for example, a reduction in price of products due to a change of season, a lapse of time or a lapse of a certain number of days, or an increase or decrease in audience rating.

The refunding method described above can also be used for refunding all of the paid amount to a purchaser from a product seller when a purchase contract is cleared or canceled under law.

### Other Embodiments

The system with the foregoing system configurations has been described in the context of the reception of content from the content delivery server 3 or the reception of a TV broadcast program using the content receiving/reproducing apparatus 10. Another embodiment of the present invention can provide an apparatus such as a digital versatile disk (DVD) recorder or a hard disk drive (HDD) recorder configured to reproduce content recorded in the apparatus.

Further, the control processing executed by the CPU 11 or 61 in the embodiment described above can be provided as a program recorded in a recording medium, and can be implemented by executing the program read from the recording medium by the CPU 11 or 61.

It should be understood by those skilled in the art that various modifications, combinations, sub-combinations and alterations may occur depending on design requirements and other factors insofar as they are within the scope of the appended claims or the equivalents thereof.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A settlement method comprising the steps of:
upon detecting an operation for purchasing a product advertised on reproduced information, the product being an article, a content item, or a service, deducting a purchase amount of the product from an electronic money balance recorded as data in an electronic money medium; and
transferring electronic money corresponding to the deducted purchase amount to a seller of the product.

2. The settlement method according to Claim 1, further comprising the step of writing purchase record data in the electronic money medium.

3. The settlement method according to Claim 1, further comprising the step of adding part or all of the purchase amount of the product paid from the electronic money medium to the electronic money balance recorded as data in the electronic money medium.

4. A content reproducing apparatus comprising:
reproducing means for reproducing information on which a product is advertised, the product being an article, a content item, or a service; and
controlling means for deducting, upon detecting an operation for purchasing the product advertised on the information reproduced by the reproducing means, a purchase amount of the product from an electronic money balance recorded as data in an electronic money medium, and transferring electronic money corresponding to the deducted purchase amount to a seller of the product.

5. The content reproducing apparatus according to Claim 4, wherein the controlling means adds part or all of the purchase amount of the product paid from the electronic money medium to the electronic money balance recorded as data in the electronic money medium.

6. The content reproducing apparatus according to Claim 4, further comprising an electronic money interface for reading and writing electronic money data from and in the electronic money medium.

7. The content reproducing apparatus according to Claim 4, further comprising a connection terminal connected to an electronic money interface for reading and writing electronic money data from and in the electronic money medium.

8. The content reproducing apparatus according to Claim 4, wherein the content reproducing apparatus is a mobile terminal, the content reproducing apparatus further comprising:
the electronic money medium; and
an electronic money interface for reading and writing electronic money data from and in the electronic money medium.

9. A recording medium having a program for settlement recorded therein, the program being adapted to make settlement when an operation for purchasing a product advertised on reproduced information is performed, the product being an article, a content item, or a service, the program causing a computer to function as:
means for, upon detecting the operation for purchasing the product, deducting a purchase amount of the product from an electronic money balance recorded as data in an electronic money medium, and transferring electronic money corresponding to the deducted purchase amount to a seller of the product.

10. A content reproducing apparatus comprising:
a reproducing unit configured to reproduce information on which a product is advertised, the product being an article, a content item, or a service; and
a control unit configured to deduct, upon detecting an operation for purchasing the product advertised on the information reproduced by the reproducing unit, a purchase amount of the product from an electronic money balance recorded as data in an electronic money medium, and to transfer electronic money corresponding to the deducted purchase amount to a seller of the product.
